# EUROPEAN PATENT SPECIFICATION

(11) **EP 3 563 911 B1**
(45) Date of publication and mention of the grant of the patent: **14.06.2023**
(21) Application number: 17888695.8
(22) Date of filing: 10.11.2017
(51) Int. Cl.: A63B 69/00, G06F 3/01, G09B 19/00

(54) **OUTPUT CONTROL DEVICE, OUTPUT CONTROL METHOD, AND PROGRAM**
AUSGABESTEUERUNGSVORRICHTUNG, AUSGABESTEUERUNGSVERFAHREN UND PROGRAMM
DISPOSITIF DE COMMANDE DE SORTIE, PROCÉDÉ DE COMMANDE DE SORTIE, ET PROGRAMME

(30) Priority: 27.12.2016 JP 2016252665
(43) Date of publication of application: 06.11.2019
(73) Proprietor: Sony Group Corporation, Tokyo 108-0075 (JP)
(72) Inventor: ITO, Osamu, Tokyo 108-0075 (JP)
(74) Representative: MFG Patentanwälte Meyer-Wildhagen Meggle-Freund Gerhard PartG mbB
(86) International application number: PCT/JP2017/040601
(87) International publication number: WO 2018/123293

(56) References cited:
- WO-A1-2008/049151
- WO-A2-2009/123396
- JP-A- 2007 167 203
- JP-A- 2011 087 794
- JP-A- 2011 516 915
- JP-A- 2017 136 142
- US-A1- 2004 077 975
- US-A1- 2010 173 276
- US-A1- 2013 089 843
- US-B1- 9 173 596

## Description

### Technical Field

The present disclosure relates to an output control device, an output controlling method and a program.

### Background Art

In recent years, technologies of using collected sensor information and assisting a user to acquire and improve techniques have been developed. For example, Patent Literature 1 discloses a technology of specifying an action that is similar to a movement made by a user on the basis of sensor information collected by a sensor device mounted on sports equipment, and giving feedback to the user in accordance with the action.

### Citation List

### Patent Literature

Patent Literature 1: JP 2016-47207A

### Disclosure of Invention

### Technical Problem

However, the technology described in Patent Literature 1 is merely capable of giving feedback in response to the action that is similar to the movement made by the user. It is difficult for the user to intuitively recognize a difference between a desired action and a movement made by the user himself/herself. In addition, the technology described in Patent Literature 1 executes the above-described process by using sensor information collected from a single sensor device mounted on equipment. Therefore, according to the technology described in Patent Literature 1, sometimes it is difficult to assist in improving a complex technique that requires a plurality of movements at once.
US 9 173 596 B1 discloses a movement assessment apparatus configured to provide biofeedback to a user regarding one or more bodily movements executed by the user. It generally includes a sensing device, a data processing device, and a sensory output device. The data processing device is configured to determine a movement path and/or velocity profile of the user using signals from the sensors, to compare the user profile determined to a respective baseline, and to determine how closely the user profile conforms to the respective baseline.
WO 2009/123396 A2 discloses a training apparatus based on a motion content including a plurality of motion detecting sensors dispersedly arranged in a body of a user to obtain position information signals. A motion controller analyzes the position information signals to detect a user motion, and compares the detected motion with a reference motion to generates a motion calibration signal for training of a motion calibration. Moreover, motion calibrating sensors stimulate the user according to the motion calibration signal and calibrate the user motion. This consequently can provide a training service for continual motions and can increase motion calibration effect.

Accordingly, the present disclosure proposes a novel and improved output control device, output control method, and program that are capable of intuitively assisting a user to acquire more complex techniques.

### Solution to Problem

According to a first aspect, the present invention provides an output control device in accordance with independent claim 1. According to a second aspect, the present invention provides an output control method in accordance with independent claim 12. According to a third aspect, the present invention provides an output controlling program in accordance with independent claim 13. Further aspects of the present invention are set forth in the dependent claims, the drawings and the following description.

### Advantageous Effects of Invention

As described above, according to the present disclosure, it is possible to more intuitively assisting a user to acquire a complex technique.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram for describing an overview of an embodiment of the present disclosure.
[FIG. 2] FIG. 2 is a functional block diagram of a device and an output control device according to the embodiment.
[FIG. 3] FIG. 3 is a diagram for describing guide stimuli according to the embodiment.
[FIG. 4] FIG. 4 is a diagram illustrating configurations of the device and the output control device that are used for a practice of dancing according to the embodiment.
[FIG. 5] FIG. 5 is a diagram illustrating an example of output control for the first time in a learning stage according to the embodiment.
[FIG. 6] FIG. 6 is a diagram illustrating an example of output control for the second time in the learning stage according to the embodiment.
[FIG. 7] FIG. 7 is a diagram illustrating an example of output control for the N-th time in the learning stage according to the embodiment.
[FIG. 8] FIG. 8 is a diagram for describing an example of output control in a checking stage according to the embodiment.
[FIG. 9] FIG. 9 is a diagram for describing generation of master data based on motion data of another user according to the embodiment.
[FIG. 10] FIG. 10 is a diagram for describing generation of master data based on image information according to the embodiment.
[FIG. 11] FIG. 11 is a flowchart illustrating a flow of operation of the output control device according to the embodiment.
[FIG. 12] FIG. 12 is a hardware configuration example according to the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, the description is given in the following order.
1. Embodiment
   1.1. Overview of embodiment
   1.2. Functional configuration example of device 10
   1.3. Functional configuration example of output control device 20
   1.4. Specific example of output control exerted by output control unit 240
   1.5. Generation example of master data
   1.6. Flow of operation of output control device 20
2. Hardware configuration example
3. Conclusion

### <1. Embodiment>

### «1.1. Overview of embodiment»

First, an overview of an embodiment according to the present disclosure will be described. As described above, in recent years, the technologies of using collected sensor information and assisting a user to acquire and improve techniques have been developed. For example, such technologies include a technology of performing an analysis based on sensor information collected by a sensor device and giving feedback to a user in accordance with a result of the analysis. This technology is used in the field of sports or the like.

However, in many cases, sensor information collected by a single sensor device is used for the above-described analysis. Therefore, sometimes it is difficult to analyze a complex movement. For example, Patent Literature 1 discloses the technology of discriminating a shot type on the basis of sensor information collected by a sensor device mounted on a tennis racket and giving feedback to a user in accordance with the shot type. However, in a normal situation, not only a movement of a dominant hand that holds the tennis racket but also a movement of a non-dominant hand that achieves a balance, shift of weight between both legs, and the like are also very important factors for a movement such as a tennis shot. Therefore, according to the technology described in Patent Literature 1, it is difficult for a user to discriminate which part of body of the user contributes to which movement even in the case where it is determined that a shot has succeeded.

In addition, although it is possible for a user to recognize whether a movement made by himself/herself has succeeded or to recognize which level the movement made by himself/herself has achieved according to the technology described in Patent Literature 1, it is difficult for the user to perceive what kind of improvement should be made in order to make a desired movement.

The technical ideas according to the present disclosure have been made in view of the above described matters. According to the technical ideas of the present disclosure, it is possible to assist a user to acquire techniques more intuitively and more effectively. Therefore, one of features of the output control device, output control method, and program according to the embodiment of the present disclosure is to calculate a difference between master data corresponding to a desired movement and motion data collected by a plurality of sensor units. In addition, one of features of the output control device, output control method, and program according to the embodiment of the present disclosure is to cause target output units to output tactile stimuli on the basis of the difference, the target output units being placed at positions corresponding to the sensor units that have collected the motion data.

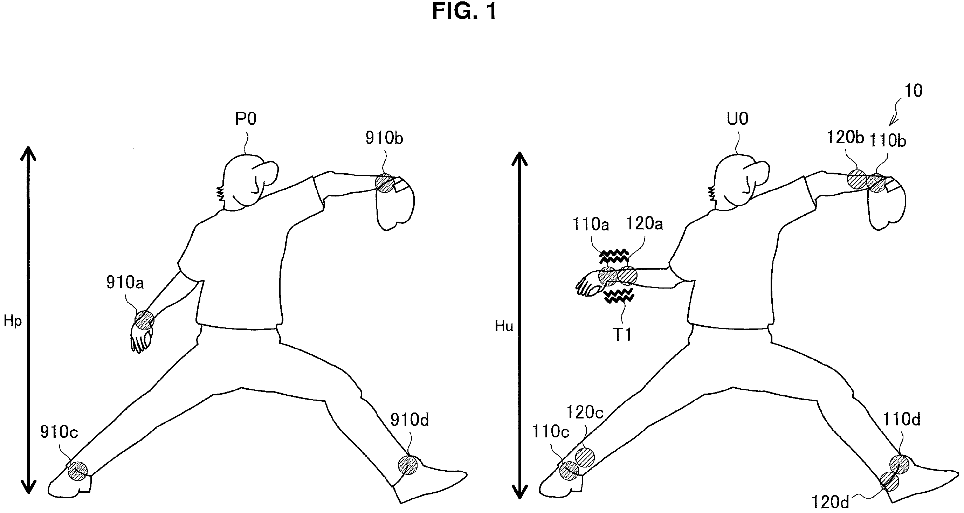

FIG. 1 is a diagram for describing an overview of the embodiment of the present disclosure. On the left side of FIG. 1, an experienced person P0 wearing four sensor devices 910a to 910d is illustrated. In addition, on the right side of FIG. 1, a target user U0 wearing a device 10 according to the embodiment is illustrated. Note that, FIG. 1 illustrates an example in which the device 10 according to the embodiment includes four sensor units 110a to 110d and four output units 120a to 120d.

As described above, one of features of an output control device 20 according to the embodiment is to calculate a difference between master data and motion data. Here, the master data according to the embodiment may be data corresponding to a movement that is desired by the target user. For example, as illustrated in FIG. 1, the master data is generated on the basis of sensor information collected by the sensor devices 910a to 910d worn by the experienced person P0. Note that, the experienced person according to the embodiment may be a professional, coach, or the like who has better techniques than the target user.

At this time, the output control device 20 according to the embodiment generates master data by processing sensor information on the basis of bodily characteristics of the target user. The sensor information is based on collected movements of the experienced person P0. For example, the output control device 20 may process the sensor information on the basis of data related to the height Hp of the experienced person P0 and the height Hu of the target user.

In addition, the motion data according to the embodiment may be sensor information collected by the sensor units 110a to 110d included in the device 10. In other words, the motion data according to the embodiment may be sensor information collected on the basis of a movement made by the target user.

The overview of the master data and the motion data according to the embodiment has been described above. The output control device 20 according to the embodiment is capable of calculating a difference between the master data and the motion data for each corresponding position or part. For example, in the example illustrated in FIG. 1, the output control device 20 calculates a difference between master data generated on the basis of the sensor device 910a and motion data collected by the sensor unit 110a. In a similar way, the output control device 20 may calculate the difference while associating the sensor unit 910b with the sensor unit 110b, associating the sensor unit 910c with the sensor unit 110c, and associating the sensor unit 910d and the sensor unit 110d.

In addition, in the case where the difference between the master data and the motion data has been detected, the output control device 20 according to the embodiment causes a target output unit to output a tactile stimulus. Here, the target output unit is an output unit placed at a position corresponding to the sensor unit that has collected the motion data whose difference from the master data has been detected. The example in FIG. 1 illustrates the case where a difference has been detected between the master data based on sensor information collected by the sensor device 910a and the motion data collected by the sensor unit 110a. In this case, as illustrated in FIG. 1, the output control device 20 according to the embodiment may cause the output unit 120a to output a tactile stimulus T1. The output unit 120a is worn on a right upper arm in the same way as the sensor unit 110a.

As described above, the output control device 20 according to the embodiment is capable of causing a target output unit to output a tactile stimulus on the basis of a difference between master data and motion data. In addition, at this time, the output control device 20 according to the embodiment is capable of controlling the tactile stimulus to be output from the target output unit on the basis of the type or magnitude of the difference. Next, functional configurations of the device 10 and the output control device 20 for achieving the above-described functions will be described.

### «1.2. Functional configuration example of device 10»

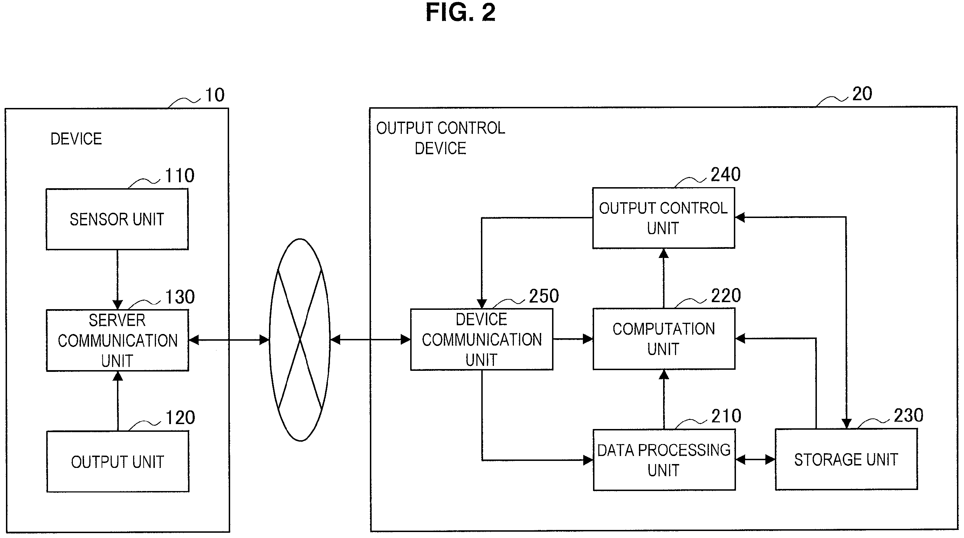

First, a functional configuration example of the device 10 according to the embodiment will be described. FIG. 2 is a functional block diagram of the device 10 and the output control device 20 according to the embodiment. With reference to FIG. 2, the device 10 according to the embodiment includes a sensor unit 110, an output unit 120, and a server communication unit 130. Here, the device 10 according to the embodiment may be a device including a plurality of sensor units 110 and a plurality of output units 120. The number of the structural elements of the device 10 and respective positions of the structural elements of the device 10 according to the embodiment may be appropriately designed in accordance with characteristics of a technical field to be applied.

In addition, the respective structural elements included in the device 10 according to the embodiment do not have to be physically connected. For example, respective pairs of the sensor units 110a to 110d and the output units 120a to 120d illustrated in FIG. 1 may be installed in independent wearable devices or the like. In addition, the device 10 according to the embodiment may be implemented by a combination of the plurality of wearable devices. In this case, the device 10 according to the embodiment may include a plurality of server communication units 130. The configuration of the device 10 according to the embodiment may be changed appropriately.

### (Sensor unit 110)

The sensor unit 110 has a function of collecting motion data. As described above, the motion data according to the embodiment may be sensor information based on a movement of the target user. Therefore, for example, the sensor unit 110 according to the embodiment may include various kinds of acceleration sensors, gyro sensors, geomagnetic sensors, pressure sensors, or the like.

### (Output unit 120)

The output unit 120 has a function of performing output under the control of the output control unit 240 in the output control device 20 (to be described later). Specifically, the output unit 120 according to the embodiment may output a tactile stimulus under the control of the output control unit 240. Therefore, the output unit 120 according to the embodiment may include a vibration generation device such as a linear vibrator, a piezo (piezoelectric) element, or an eccentric motor. In addition, the output unit 120 according to the embodiment may output acoustic information or optical information under the control of the output control unit 240. In this case, the output unit 120 includes a speaker, a light-emitting element, or the like.

In addition, the example in FIG. 1 illustrates the case where the output units 120 are placed near corresponding sensor units 110. However, the placement of the output units 120 according to the embodiment is not limited thereto. The output units 120 according to the embodiment may be placed independently from placement of the corresponding sensor units 110. The output units 120 may be appropriately placed at positions suitable for providing tactile senses and effective for correcting a movement.

### (Server communication unit 130)

The server communication unit 130 has a function of performing information communication with the output control device 20. Specifically, the server communication unit 130 according to the embodiment transmits motion data collected by the sensor units 110, to the output control device 20. In addition, the server communication unit 130 according to the embodiment receives an output control signal from the output control device 20. The output control signal is used for controlling output from the output unit 120.

The functional configuration example of the device 10 according to the embodiment has been described above. Note that, the above described functional configuration is a mere example, and the functional configuration of the device 10 according to the embodiment is not limited thereto. For example, the device 10 according to the embodiment may further include a structural element other than the above-described structural elements. The device 10 may further include an input unit or the like that receives operation input by a user.

In addition, the case where the device 10 and the output control device 20 are implemented as independent devices has been described above as an example with reference to FIG. 2. However, the system configuration example according to the embodiment is not limited thereto. The device 10 and the output control device 20 according to the embodiment may be implemented as an integrated device. The system configuration according to the embodiment may be flexibly changed in accordance with characteristics of information to be handled, specifications of the system, operational conditions, or the like.

### <<1.3. Functional configuration example of output control device 20»

Next, details of the functional configuration example of the output control device 20 according to the embodiment will be described with reference to FIG. 2 again. With reference to FIG. 2, the output control device 20 according to the embodiment includes a data processing unit 210, a computation unit 220, a storage unit 230, the output control unit 240, and a device communication unit 250.

### (Data processing unit 210)

The data processing unit 210 has a function of generating master data on the basis of sensor information. As described above with reference to FIG. 1, for example, the data processing unit 210 according to the embodiment may generate master data from sensor information collected on the basis of a movement made by an experienced person.

In addition, at this time, the data processing unit 210 according to the embodiment processes the sensor information on the basis of bodily characteristics of a target user who are wearing the device 10, and generates the master data. For example, the data processing unit 210 may process the sensor information by using the bodily characteristics such as height, weight, length of an arm, or length of a leg. In addition, for example, the data processing unit 210 may generate master data on the basis of information such as the dominant arm of the target user. In other words, the data processing unit 210 according to the embodiment has a function of processing sensor information such that a difference in bodily characteristics between the experienced person and the target user is eliminated.

In addition, the data processing unit 210 may generate master data on the basis of a difference between set movements prepared for the experienced person and the target user. For example, the difference in the set movements may be assumed in the case where the experienced person and the target user should make bilaterally symmetric movements, in the case where the experienced person and the target user should make a same movement with a predetermined time difference, or the like. By using the above-described functions of the data processing unit 210 according to the embodiment, it is possible to generate master data that is tailored to the bodily characteristics of the target user or the difference in set movements. Therefore, it is possible to provide the target user with a difference from a desired movement, more accurately. In addition, by using the above-described functions of the data processing unit 210 according to the embodiment, it is possible to use sensor information collected from a single experienced person, for a plurality of target users.

In addition, it is also possible for the data processing unit 210 according to the embodiment to generate master data on the basis of sensor information collected by a plurality of sensor devices. For example, the data processing unit 210 is capable of calculating a center of gravity or the like from pressure information collected by a plurality of pressure sensors, and use the center of gravity as master data. In this case, it is possible for the computation unit 220 (to be described later) to calculate motion data on the basis of sensor information collected by the plurality of sensor units 110 in a similar way, and compare the motion data with the master data.

### (Computation unit 220)

The computation unit 220 has a function of calculating a difference between the master data and the motion data. As described above, the motion data according to the embodiment may be sensor information collected by the sensor units 110 in the device 10.

Note that, in the above description, the case where the data processing unit 210 according to the embodiment generates master data on the basis of bodily characteristics of the target user has been described. However, the function of correction based on bodily characteristics may be implemented as a function of the computation unit 220. In this case, master data is shared by a plurality of target users, and computation is carried out in view of bodily characteristics when the computation unit 220 calculates the difference.

### (Storage unit 230)

The storage unit 230 has a function of storing programs and data used by respective structural elements of the output control device 20. In particular, the storage unit 230 according to the embodiment stores master data generated by the data processing unit 210 and motion data collected by the device 10. In addition, the storage unit 230 stores bodily characteristics of the target user and the experienced person, difference information calculated by the computation unit 220, and the like,

Note that, in the case where a plurality of the output control devices 20 is installed, each of the storage units 230 holds both master data generated on the basis of movements made by the experienced person and motion data of the target user. In this case, the experienced person and the target users may share a single output control device 20, or master data may be copied from a storage unit 230 of an output control device 20 allocated to the experienced person, to storage units 230 of respective output control devices 20 allocated to the target users. At this time, the master data may be copied through various kinds of storage media or the like, or through information communication via the device communication units 250.

### (Output control unit 240)

The output control unit 240 has a function of controlling output related to the plurality of output units 120 included in the device 10, on the basis of a difference calculated by the computation unit 220. At this time, the output control unit 240 according to the embodiment causes a target output unit to output a tactile stimulus on the basis of the difference, the target output unit being placed at a position corresponding to a sensor unit 110 that has collected the motion data. In other words, the output control unit 240 according to the embodiment generates a control signal for controlling the output unit 120 corresponding to the sensor unit 110 that has collected the motion data, on the basis of the difference between the master data and the motion data.

At this time, for example, the output control unit 240 according to the embodiment may control the tactile stimulus to be output from the target output unit on the basis of the type or magnitude of the difference.

For example, in the case where the computation unit 220 has calculated a difference related to a movement start timing, the output control unit 240 according to the embodiment may control an output timing of a tactile stimulus to be output from the target output unit, on the basis of the difference related to the movement start timing.

In addition, for example, in the case where the computation unit 220 has calculated a difference related to magnitude of a movement, the output control unit 240 according to the embodiment may control strength or frequency of a tactile stimulus to be output from the target output unit, on the basis of the difference related to the magnitude of the movement.

In addition, for example, in the case where the computation unit 220 has calculated a difference related to duration of a movement, the output control unit 240 according to the embodiment may control duration or strength of a tactile stimulus to be output from the target output unit, on the basis of the difference related to the duration of the movement.

In addition, the tactile stimulus that the output control unit 240 according to the embodiment causes the target output unit to output may include a guide stimulus for guiding a target user to a movement corresponding to master data. The output control unit 240 is capable of controlling the guide stimulus to be output from the target output unit, on the basis of a difference between master data and motion data. Here, the guide stimulus according to the embodiment is a stimulus for guiding the target user such that the target user imitates a movement made by the experienced person. Therefore, the output control unit 240 according to the embodiment may cause the target output unit to output the guide stimulus before a timing of when the target user should make a movement corresponding to master data. The target user is capable of recognizing a start timing or magnitude of a movement that the target user should make, by perceiving the guide stimulus that has been output.

In addition, the guide stimulus according to the embodiment may be generated on the basis of a tendency of a difference between a movement made by the experienced person and a movement made by the target user. Accordingly, in the case where the target user does a practice repeatedly, the computation unit 220 is capable of calculating a last difference between master data and motion data collected at the time of a last movement, and the output control unit 240 is capable of controlling output of a guide stimulus on the basis of the last difference. By using the above-described functions of the output control unit 240 according to the embodiment, an effect of gradually reducing a difference between a movement made by an experienced person and a movement made by a target user is expected as a result of a repeated practice.

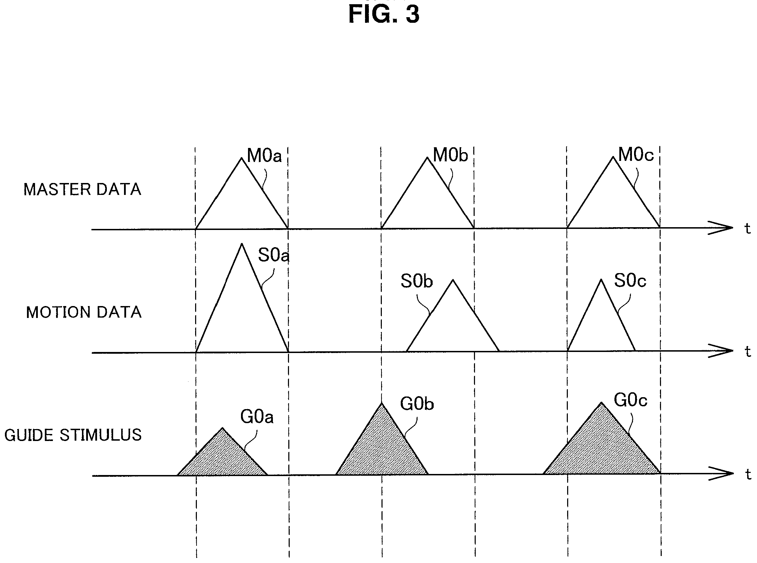

FIG. 3 is a diagram for describing guide stimuli according to the embodiment. FIG. 3 illustrates master data M0a to MOc generated on the basis of a movement made by an experienced person, and motion data S0a to SOc collected on the basis of a movement made by a target user. As described above, the motion data S0a to SOc illustrated in FIG. 3 may be motion data collected at the time of a last series of movements. In addition, FIG. 3 illustrates guide stimuli G0a to G0c that the output control unit 240 causes to be output on the basis of differences between the master data M0a to MOc and the motion data S0a to S0c. Note that, in FIG. 3, a vertical axis represents magnitude of the movements or the tactile stimuli, and a horizontal axis represents a lapse of time.

Here, with reference to FIG. 3, the piece S0a of motion data is larger than the piece Ma of the master data. This means that the movement made by the target user at the time of the last series of movements is larger than the movements made by the experienced person. In this case, the output control unit 240 may cause a target output unit to output the weaker guide stimulus G0a than a default guide stimulus. The target user is capable of intuitively dropping the magnitude of the movement by perceiving the guide stimulus G0a.

In addition, with reference to FIG. 3, it is understood that the piece S0b of the motion data is later than the piece M0b of the master data. This means that the start timing of the movement made by the target user at the time of the last series of movements is later than the movement made by the experienced person. In this case, the output control unit 240 may cause the target output unit to output the guide stimulus G0b at a timing earlier than the default guide stimulus. The target user is capable of intuitively quickening the start timing of the movement by perceiving the guide stimulus G0b.

In addition, with reference to FIG. 3, the piece SOc of the motion data is shorter than the piece MOc of the master data. This means that the duration of the movement made by the target user at the time of the last series of movements is shorter than the movement made by the experienced person. In this case, the output control unit 240 may cause the target output unit to output the guide stimulus G0c with longer duration than the default guide stimulus. The target user is capable of intuitively making the movement with longer duration by perceiving the guide stimulus G0c.

### (Device communication unit 250)

The device communication unit 250 has a function of performing information communication with the device 10. Specifically, the device communication unit 250 according to the embodiment receives motion data from the device 10. In addition, the device communication unit 250 according to the embodiment transmits a control signal to the device 10. The control signal is to be used for controlling output from the output unit 120.

The functional configuration example of the output control device 20 according to the embodiment has been described above. Note that, the above described functional configuration is a mere example, and the functional configuration of the output control device 20 according to the embodiment is not limited thereto. For example, the output control device 20 according to the embodiment may further include a structural element other than the structural elements described above. For example, the output control device 20 may further include an input unit that receives operation input by a user, a display unit that displays various kinds of information, or the like. In addition, as described above, the device 10 and the output control device 20 according to the embodiment may be implemented as an integrated device. In this case, the output control device 20 may further include the sensor units 110 and the output units 120. The functional configuration of the output control device 20 according to the embodiment may be flexibly changed.

### «1.4. Specific example of output control exerted by output control unit 240»

Next, a specific example of output control exerted by the output control unit 240 according to the embodiment will be described. Hereinafter, a case where the device 10 and the output control device 20 according to the embodiment are applied for a practice of dancing will be described as an example. As described above, it is also possible to use the device 10 and the output control device 20 according to the embodiment for a practice of dancing in addition to acquisition of techniques in sports. In addition, in the case where the device 10 and the output control device 20 according to the embodiment are used for a practice of dancing, tactile stimuli effectively works for acquiring rhythm to music in addition to acquisition of forms. In addition, in the case of doing a practice in a group, it is difficult to provide information such as audio information and visual information to each individual. Therefore, provision of tactile stimuli based on differences according to the embodiment will be a more effective way.

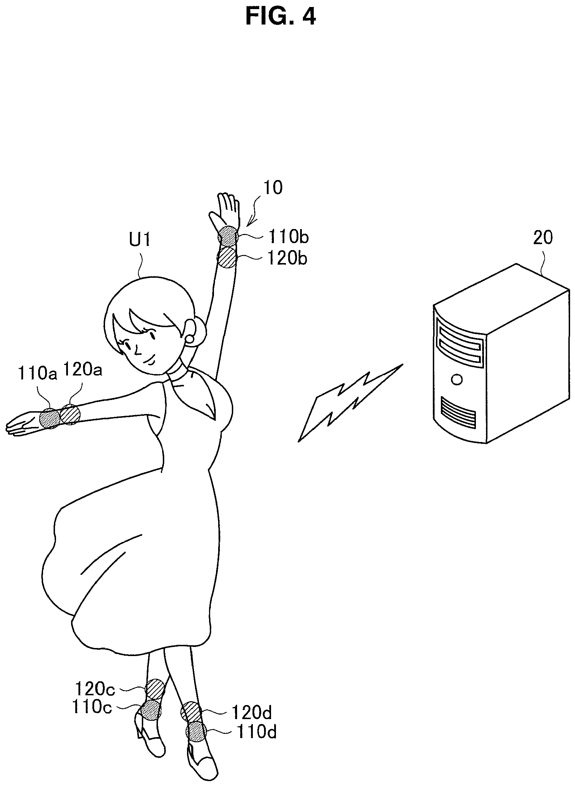

FIG. 4 is a diagram illustrating configurations of the device 10 and the output control device 20 that are used for a practice of dancing according to the embodiment. As illustrated in FIG. 4, the device 10 used for a practice of dancing includes four sensor units 110a to 110d and four output units 120a to 120d. In addition, for example, the respective sensor units 110a to 110d and the respective output units 120a to 120d may be worn on both wrists and both ankles of a target user. In addition, the sensor units 110a to 110d include triaxial acceleration sensors, triaxial gyro sensors, or the like. In addition, the server communication units 130 (not illustrated) transmit motion data collected by the sensor units 110a to 110d to the output control device 20, and deliver control signals received from the output control device 20 to the output units 120a to 120d.

Note that, in the following description, a case where master data is collected and generated on the basis of movements made by an experienced person who is a professional and the master data is synchronized with music, will be described as an example. In addition, hereinafter, the practice of dancing in divided into two stages, which are a learning stage and a checking stage.

### (Learning stage)

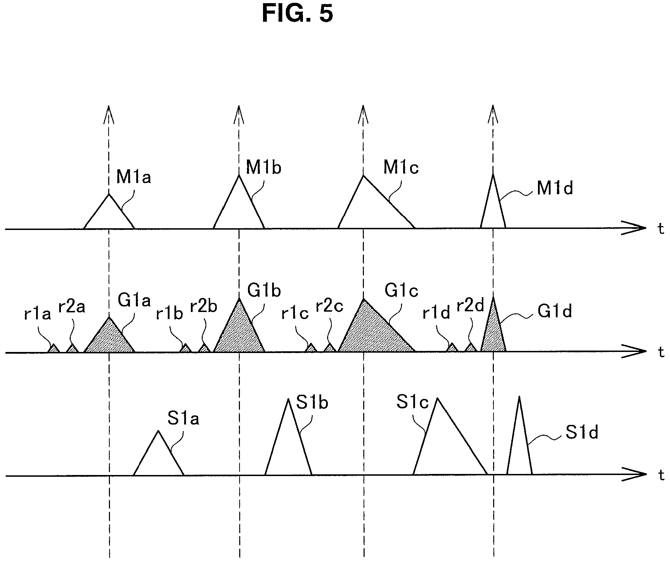

In the learning stage according to the embodiment, a target user practices for learning a movement corresponding to master data. FIG. 5 is a diagram illustrating an example of output control for the first time in the learning stage according to the embodiment.

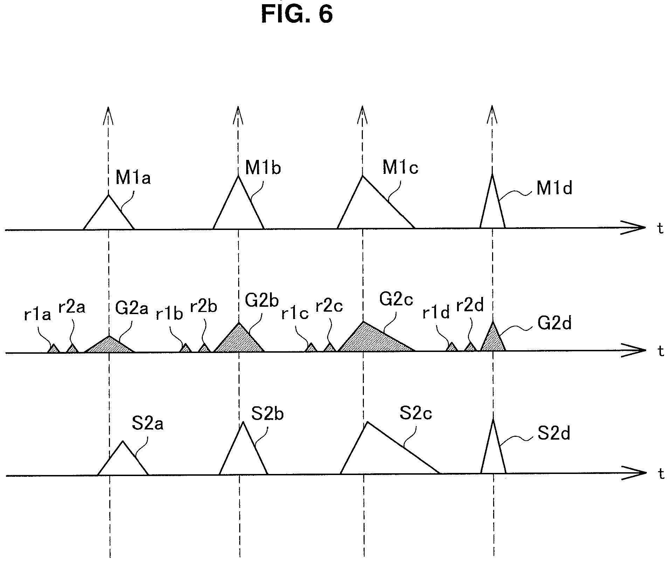

FIG. 5 illustrates master data M1a to M1d, guide stimuli G1a to G1d corresponding to the master data M1a to M1d, and motion data S1a to S1d collected for the first time on the basis of a series of movements made by the target user. Note that, in FIG. 5 and subsequent FIGs. 6 to 8, a vertical axis represents magnitude of the movements and the tactile stimuli, and a horizontal axis represents a lapse of time in a way similar to FIG. 3.

Here, in the case of the first time in the learning stage, there is no motion data obtained at the time of a last series of movements. Therefore, the guide stimuli G1a to G1d illustrated in FIG. 5 may be respective default guide stimuli that are controlled in accordance with the master data M1a to M1d. As illustrated in FIG. 5, the default guide stimuli according to the embodiment may be controlled as tactile stimuli corresponding to the magnitude, start timings, and duration of the master data. In addition, as illustrated in FIG. 5, each of the guide stimuli according to the embodiment may include assistant stimuli r1 and r2 for providing the target user with the motion start timing. The assistant stimuli may play a role in counting down to the movement start timings.

Here, when focusing on the motion data S1a to S1d in FIG. 5, it is understood that the target user has made movements after provision of the guide stimuli G1a to G1d. In such a case, a coach first teaches the target user about a relation between the guide stimuli and the movement start timings. In addition, when focusing on the motion data S1a to S1d, it is understood that the target user has made larger movements than the movements corresponding to the master M1a to M1d. In such a case, the output control unit 240 according to the embodiment exerts control such that guide stimuli to be output next time get weaker on the basis of differences calculated by the computation unit 220.

FIG. 6 is a diagram illustrating an example of output control for the second time in the learning stage according to the embodiment. FIG. 6 illustrates the master data M1a to M1d that are the same as the master data used for the first time, guide stimuli G2a to G2d adjusted by using the motion data S1a to S1d obtained for the first time, and motion data S2a to S2d collected for the second time on the basis of movements made by the target user.

Here, when focusing on the guide stimuli G2a to G2d in FIG. 6, it is understood that they are weaker than the guide stimuli G1a to G1d used for the first time. As described above, the output control unit 240 according to the embodiment is capable of controlling the guide stimuli G2a to G2d to be output from target output units on the basis of differences between the master data M1a to M1d and the motion data S1a to S1d collected at the time of the last series of movements.

In addition, when focusing on the motion data S2a to S2d, it is understood that the magnitude and start timings of the movements have gotten closer to the master data M1a to M1d. On the other hand, when focusing on the piece S2a of the motion data, it is understood that the target user tends to start making a movement late in response to the weak guide stimulus G2a. In addition, when focusing on the piece S2c of the motion data, it is understood that the target user tends to extend duration of a movement in response to the guide stimulus G2c that gradually gets weaker. In such a case, the output control unit 240 according to the embodiment is capable of independently controlling guide stimuli to be output next time on the basis of the above-described tendencies.

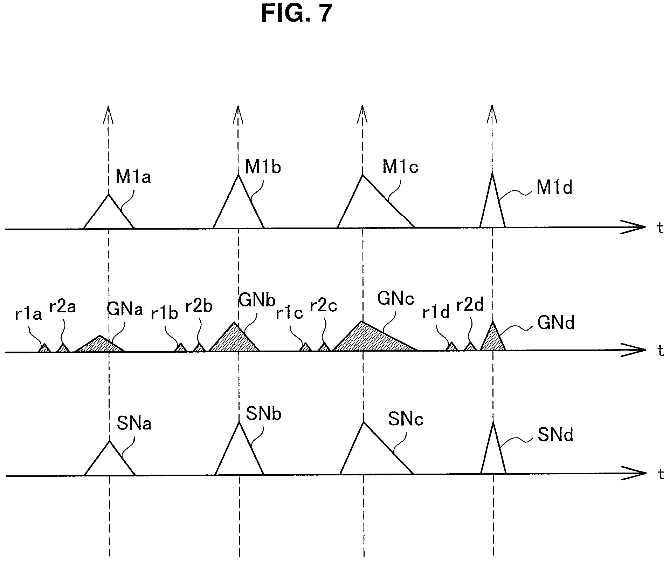

FIG. 7 is a diagram illustrating an example of output control for the N-th time in the learning stage according to the embodiment. FIG. 7 illustrates the master data M1a to M1d that are the same as the master data used for the first to (N-1)-th time, guide stimuli GNa to GNd adjusted by using the motion data obtained for the first to (N-1)-th time, and motion data SNa to SNd collected for the N-th time on the basis of movements made by the target user.

Here, when focusing on the guide stimuli GNa to GNd in FIG. 7, it is understood that the guide stimuli GNa to GNd are independently controlled in accordance with respective movement tendencies of the target user in comparison with the default guide stimuli G1a to G1d illustrated in FIG. 5. In addition, when focusing on the motion data SNa to SNd, it is understood that the target user has become capable of making the same movements as the master data M1a to M1d through the N-th practice. As described above, by using the functions of the output control unit 240 according to the embodiment, it is possible to assist each target user in acquiring techniques by adjusting output start timings, strength, duration, and the like of guide stimuli in accordance with movement tendencies of each target user.

Note that, to reduce a burden on the target user, the output control unit 240 may stop outputting the tactile stimuli in the case where the sum of output tactile stimuli reaches a predetermined threshold. Alternatively, the output control unit 240 is also capable of stopping outputting tactile stimuli or music in the case where gaps between movements reaches a predetermined threshold or more, or in the case where the target user stops moving.

### (Checking stage)

Next, an example of output control in a checking stage according to the embodiment will be described. Here, the checking stage according to the embodiment is a stage for causing the target user to perceive differences from the master data. In addition, the checking state according to the embodiment is a stage for causing the target user to make a movement identical to the master data even in the case where tactile stimuli are not provided hereafter or even in the case of using tactile stimuli that are common to other users.

Therefore, in the checking stage according to the embodiment, the output control unit 240 causes the target output units to output feedback stimuli in addition to the guide stimuli. The feedback stimuli provide the target user with the differences. At this time, the output control unit 240 may control the feedback stimuli on the basis of the types or magnitude of the differences calculated by the computation unit 220. Here, for example, the types of the differences include the magnitude, start timing, duration, and the like of a movement. The output control unit 240 according to the embodiment may control the strength, duration, frequency, waveform patterns of the feedback stimuli on the basis of the types or magnitude of the differences described above. Note that, it is possible to previously notify the target user of which type corresponds to which frequency or which waveform pattern. In addition, it is also possible for the target user to select an intuitive combination for himself/herself.

Next, the example of output control in the checking stage according to the embodiment will be described with reference to specific examples. Note that, hereinafter, a case where the output control unit 240 controls output related to a difference in a start timing of a single movement will be described as an example. In addition, the following example is an example in which the checking stage starts after the output control for the N-th time in the learning stage illustrated in FIG. 7, that is, in a state in which the target user is capable of making a movement identical to the master data in the case where there are guide stimuli controlled such that the guide stimuli are dedicated to the target user. However, it is also possible to start the checking stage according to the embodiment at any timing.

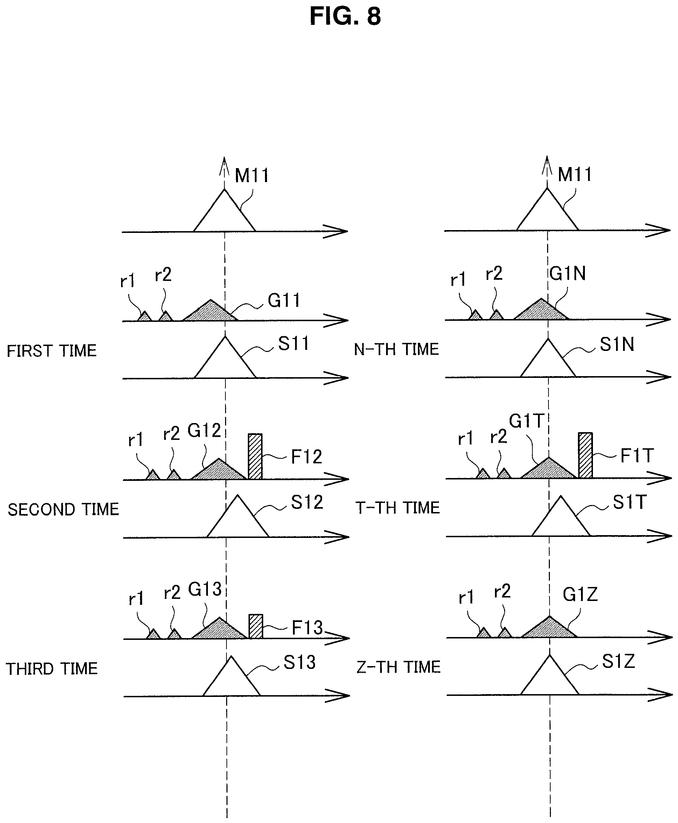

FIG. 8 is a diagram for describing an example of output control in the checking stage according to the embodiment. On the left side of FIG. 8, master data M11 and examples of output control exerted for the first to third time in the checking stage are illustrated. In addition, on the right side of FIG. 8, the master data M11 and examples of output control exerted for the N-th, T-th, and Z-th time in the checking stage are illustrated.

First, the example of output control for the first time in the checking stage will be described. For the first time in the checking stage, the output control unit 240 may output the same guide stimulus as the guide stimulus that has been output for the N-th time in the learning stage. In other words, the guide stimulus G11 in FIG. 8 is controlled such that the guide stimulus G11 is output at an earlier timing than the default guide stimulus on the basis of the movement tendencies of the target user. In addition, when focusing on the motion data S11, it is understood that the target user has become capable of making the same movement as the master data M11 in the case of outputting the guide stimulus G11 that is controlled as described above.

Next, the example of output control for the second time in the checking stage will be described. For the second time in the checking stage, the output control unit 240 causes a guide stimulus G12 to be output at a later timing than the guide stimulus G11 that has been output for the first time, such that the guide stimulus G12 gets closer to the default guide stimulus. Here, when focusing on the motion data S12, it is understood that the motion start timing of the target user has become later because the guide stimulus G12 has been controlled as described above.

At this time, the output control unit 240 causes a target output unit to output a feedback stimulus F12 on the basis of the gap between the movement start timings, that is, on the basis of the difference between the master data M11 and the motion data S12. Here, the feedback stimulus F12 uses frequency or a waveform pattern that the target user has previously recognized as a stimulus corresponding to a delay in the start timing. The target user is capable of recognizing the delay in his/her movement start timing by perceiving the feedback stimulus F12. Note that, the output control unit 240 may cause the feedback stimulus to be output within a predetermined period of time after the target user makes a movement corresponding to the master data M11. In such a way, it is possible to avoid confusion between the guide stimulus and the feedback stimulus.

Next, the example of output control for the third time in the checking stage will be described. For the third time in the checking stage, the output control unit 240 may cause a guide stimulus G13 to be output at the same timing as the guide stimulus G12 that has been output for the second time. In such a way, the output control unit 240 fixes an output timing of the guide stimulus until the target user voluntarily moves up the movement start timing and finishes making the movement that is identical to the master data M11 again. In addition, when focusing on the motion data S13, it is understood that the movement start timing of the target user has gotten closer to the master data M11 in comparison with the movement start timing for the second time. Therefore, the output control unit 240 causes a weaker feedback stimulus F13 to be output for the third time than the feedback stimulus F12 that has been output for the second time.

Next, the example of output control for the N-th time in the checking stage will be described. A guide stimulus G1N is output for the N-th time at a fixed timing in a way similar to the guide stimulus G13 that has been output for the third time. In addition, when focusing on the motion data S1N, it is understood that the target user has been capable of starting a movement at a timing identical to the master data M11.

Next, the example of output control for the T-th and subsequent time in the checking stage will be described. For the T-th and subsequent time in the checking stage, control of bringing an output timing of a guide stimulus closer to the master data and control of fixing the output timing of the guide stimulus until the target user finishes making a movement identical to the master data M11 are repeatedly exerted, as described above with regard to the output control for the second to N-th time. In addition to the above-described control, the output control unit 240 causes the target output unit to output a feedback stimulus based on a difference from the master data M11.

As illustrated in FIG. 8, even in the case of outputting a default guide stimulus G1Z for the Z-th time, the output control unit 240 according to the embodiment exerts the above-described control and the user develops his/her techniques such that the user becomes capable of making the same movement as the master data M11. In other words, by using the functions of the output control unit 240 according to the embodiment, it is possible for the target user to make movements identical to the master data even in the case where tactile stimuli are not provided hereafter or even in the case of using tactile stimuli that are common to other users.

The examples of output control at the time of checking according to the embodiment have been described above. As described above, the output control unit 240 according to the embodiment is capable of correcting movement tendencies of the target user by gradually brining the guide stimuli adjusted for the target user, to default states. Note that, at this time, the output control unit 240 may repeat the control while suppressing amounts of change that is adjusted at one time, such that the target user does not get a feeling of strangeness. Since the output control unit 240 exerts the control as described above, an effect of causing the target user to unconsciously correct movement start timings is also expected.

In addition, the case of correcting a gap in the movement start timings has been described as an example with reference to FIG. 8. However, the output control unit 240 according to the embodiment is also capable of correcting a gap in magnitude or duration of movements by using a method similar to the above-described method. In addition, the output control unit 240 may exert the above-described control over the plurality of output units 120 at the same time. It is possible for the target user to finally make the same movements as master data when the output control unit 240 controls output of tactile stimuli based on the types of differences step by step or in parallel.

In addition, at this time, the output control unit 240 may select which output units 120 output tactile stimuli, in accordance with importance of movement parts. For example, in the case where gaps in movements are detected with regard to a plurality of parts, the output control unit 240 may cause an output unit 120 that is placed at a more important part to preferentially output a tactile stimulus. In addition, it is also possible for the output control unit 240 to limit the number of output units 120 that output tactile stimuli at the same time. On the other hand, it is also possible for the output control unit 240 to cause the output units 120 to output tactile stimuli in the order gaps of movements have been detected.

### «1.5. Generation example of master data»

Next, details of a generation example of master data according to the embodiment will be described. The case where the master data is collected and generated in advance on the basis of movements made by the experienced person such as the professional or the coach, has been described above as an example. However, the generation of master data according to the embodiment is not limited thereto. For example, the master data according to the embodiment may be generated on the basis of motion data collected from movements made by another user who is wearing the device 10. In addition, the motion data collected from the movements made by the other user may be collected simultaneously with motion data collected from movements made by a target user who is wearing the device 10.

### (Generation of master data based on motion data of another user)

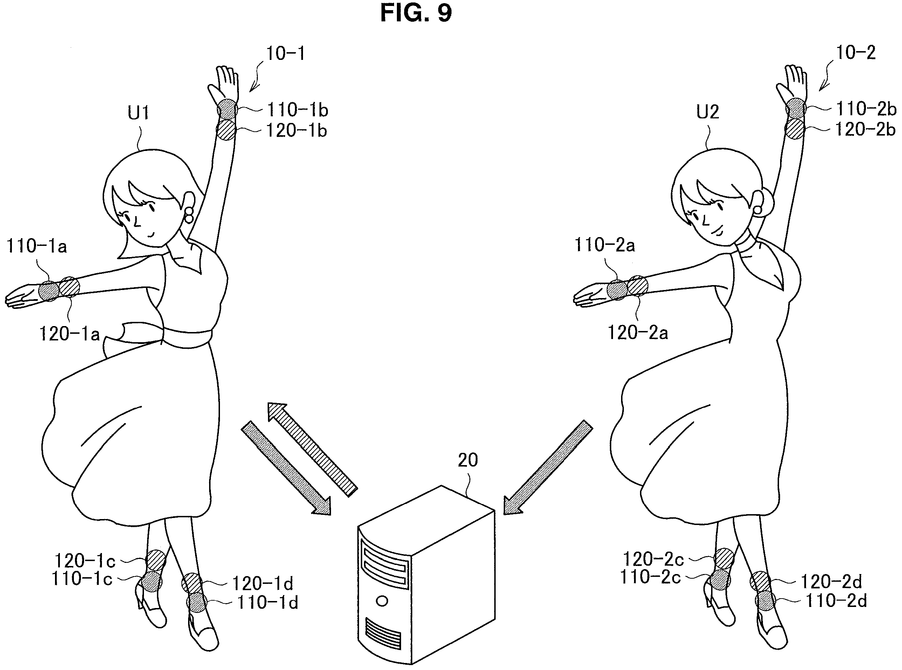

FIG. 9 is a diagram for describing generation of master data based on motion data of another user according to the embodiment. FIG. 9 illustrates a target user U1 who is wearing a device 10-1, another user U2 who is wearing a device 10-2, and the output control device 20. Here, the other user U2 may be an experienced person such as a professional or a coach.

In this case, the target user U1 and the other user U2 do a dance to same music with same choreography at the same time. In other words, the data processing unit 210 according to the embodiment is capable of processing motion data of the other user U2 collected at the same time as motion data of the target user U1, and generating master data. In this case, the computation unit 220 may compare the master data generated by the data processing unit 210 with the motion data of the target user U2 in real time, and may calculate differences. On the basis of the differences successively calculated by the computation unit 220, the output control unit 240 is capable of causing tactile stimuli to be output from the device 10-1 worn by the target user U1.

As described above, the master data according to the embodiment may be collected and generated at the same time as the motion data of the target user. Since the output control device 20 according to the embodiment generates master data in real time and compare the master data with motion data of a target user, it is possible for the target user to intuitively perceive differences in movements from the experienced person (the other user).

In addition, it is also possible for the output control unit 240 to cause the device 10-1 worn by the target user U1 and the device 10-2 worn by the other user U2 to output the same tactile stimuli. In this case, it is also possible for the other user U2 who is the experienced person to perceive the differences in movements from the target user U1. Therefore, it is possible for the other user U2 to give advice by voice for decreasing gaps in the movements.

In addition, FIG. 9 illustrates the case where there are one target user and another user, whereas there may be a plurality of target users and a plurality of other users according to the embodiment. In addition, the other users may also serve as the target users at the same time. The output control device 20 according to the embodiment may provide the plurality of target users with respective stimuli on the basis of motion data of a single experienced person (another user). In addition, for example, the output control device 20 is also capable of averaging pieces of motion data collected from the plurality of other users, generating master data, and comparing the master data with each piece of the motion data. In this case, for example, it is possible for the target users to perceive differences between the averaged movements and their own movements with regard to a group dance or a marching band. Therefore, it is possible to achieve more unified group behavior.

### (Generation of master data based on image information)

The case where master data according to the embodiment is generated in real time has been described above. On the other hand, for example, the master data according to the embodiment may be generated on the basis of image information that has been recorded in the past. At this time, the data processing unit 210 according to the embodiment is capable of detecting movements by tracking feature points extracted from an image.

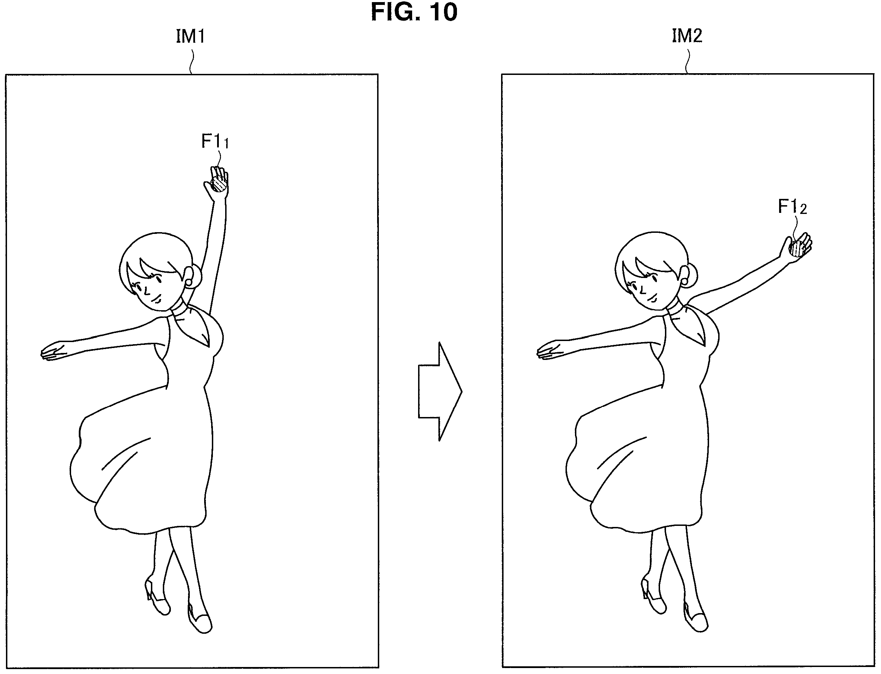

FIG. 10 is a diagram for describing generation of master data based on image information according to the embodiment. FIG. 10 illustrates two images IM1 and IM2. Here, the images IM1 and IM2 may be chronologically successive image information. In addition, FIG. 10 illustrates a feature point F1₁ extracted by the data processing unit 210 from the image IM1, and a feature point F1₂ extracted by the data processing unit 210 from the image IM2. At this time, the data processing unit 210 according to the embodiment is capable of detecting a target movement by matching the two corresponding feature points F1₁ and F1₂ and calculating a travel distance of pixels. In addition, the data processing unit 210 is also capable of calculating the speed of the movement from the recording time of the image IM1 and the recording time of the image IM2. For example, the data processing unit 210 may perform the above-described process by using a technology such as optical flow that is used in the field of image identification.

The generation of master data based on image information according to the embodiment has been described above. By using the above-described functions of the data processing unit 210 according to the embodiment, it is possible to generate master data from image information that has been recorded in the past. Therefore, for example, it is possible to compare movements made by a target user with movements made by good record holders in the past or a fantastic play or the like made by the target user himself/herself in the past.

In addition, the case of generating master data by tracking a feature point extracted by the data processing unit 210 has been described above as an example, whereas it is also possible to simplify the process by filming movements of a target person who is wearing various kinds of markers, for example. The image information according to the embodiment may include a three-dimensional moving image, a two-dimensional moving image, or the like.

### «1.6. Flow of operation of output control device 20»

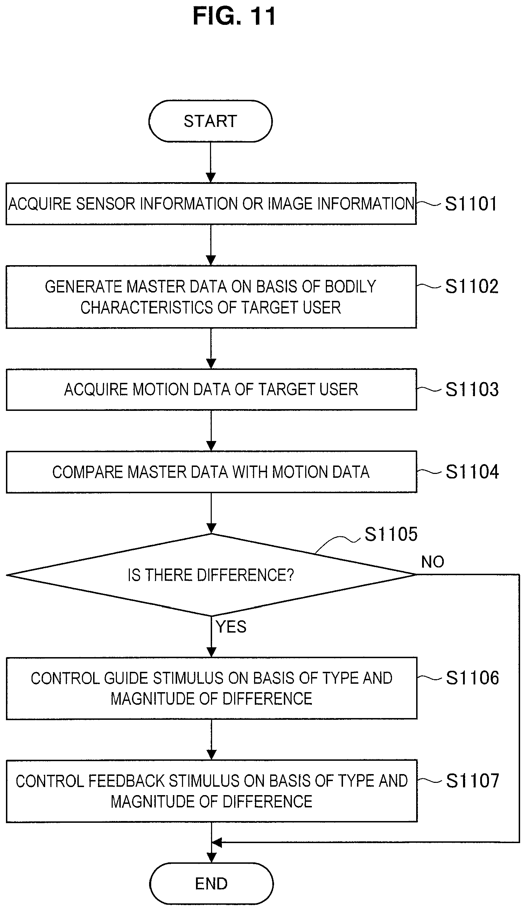

Next, flow of operation of the output control device 20 according to the embodiment will be described. FIG. 11 is a flowchart illustrating a flow of operation of the output control device 20 according to the embodiment.

With reference to FIG. 11, the device communication unit 250 in the output control device 20 first acquires sensor information or image information (Step S1101).

Next, the data processing unit 210 generates the master data on the basis of the information acquired in Step S1101 and bodily characteristics of a target user (Step S1102).

Next, the device communication unit 250 acquires motion data from the device10, the motion data having been collected on the basis of movements of the target person (Step S1103).

Next, the computation unit 220 compares the master data generated in Step S1102 with the motion data acquired in Step S1103 (Step S1104).

Here, in the case where a difference between the master data and the motion data is detected (YES in Step S1105), the output control unit 240 causes the device 10 to output a guide stimulus on the basis of the type and magnitude of the detected difference (1106).

In addition, in a checking stage, the output control unit 240 causes the device 10 to output a feedback stimulus on the basis of the type and magnitude of the detected difference (Step S1107).

The output control device 20 ends the process related to output control of tactile stimuli after the operation in Step S1106 and Step S1107 is completed, or in the case where no difference is detected between the master data and the motion data (NO in Step S1105).

### <2. Hardware configuration example>

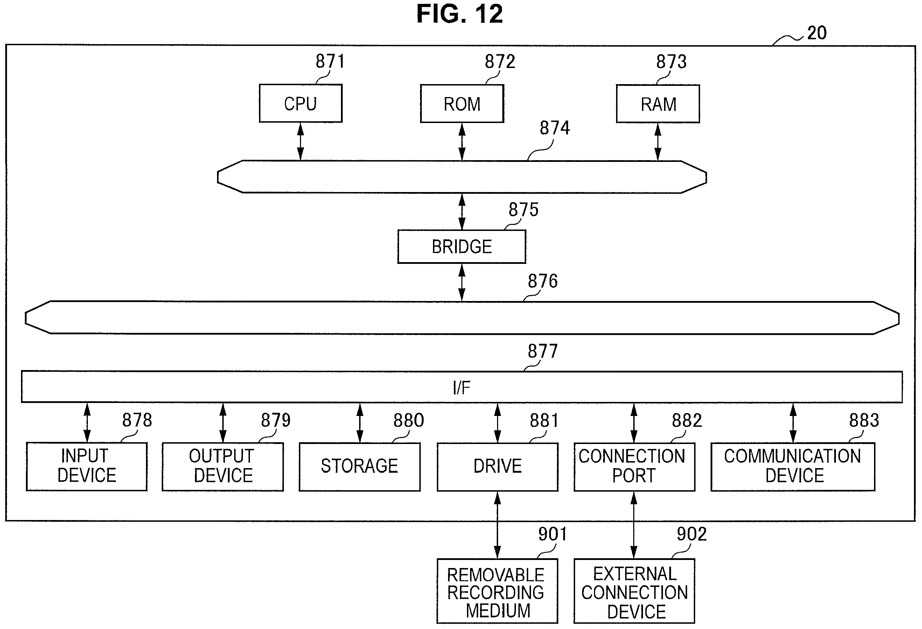

Next, a hardware configuration example of the output control device 20 according to the present disclosure will be described. FIG. 12 is a block diagram illustrating the hardware configuration example of the output control device 20 according to the present disclosure. With reference to FIG. 12, for example, the output control device 20 according to the present disclosure includes a CPU 871, ROM 872, RAM 873, a host bus 874, a bridge 875, an external bus 876, an interface 877, an input device 878, an output device 879, a storage 880, a drive 881, a connection port 882, and a communication device 883. Note that, the hardware configuration illustrated here is an example. Some of the structural elements may be omitted. In addition, a structural element other than the structural elements illustrated here may be further added.

### (CPU 871)

The CPU 871 functions as an arithmetic processing device or a control device, for example, and controls entire operation or a part of the operation of each structural element on the basis of various programs recorded on the ROM 872, the RAM 873, the storage 880, or a removable recording medium 901.

### (ROM 872 and RAM 873)

The ROM 872 is a mechanism for storing a program to be loaded on the CPU 871, data used in an arithmetic operation, or the like. The RAM 873 temporarily or permanently stores, for example, a program to be loaded on the CPU 871, various parameters that arbitrarily changes in execution of the program, or the like.

### (Host bus 874, bridge 875, external bus 876, and interface 877)

The CPU 871, the ROM 872, and the RAM 873 are interconnected with each other, for example, via the host bus 874 capable of high-speed data transmission. On the other hand, the host bus 874 is connected, for example, via the bridge 875, to the external bus 876 having comparatively low data transmission speed. In addition, the external bus 876 is connected with various structural elements via the interface 877.

### (Input device 878)

For example, as the input device 878, a mouse, a keyboard, a touchscreen, a button, a switch, a lever, or the like is used. In addition, as the input device 878, a remote controller (hereinafter, referred to as a remote) capable of transmitting a control signal by using infrared or other radio waves may be used.

### (Output device 879)

The output device 879 is, for example, a display device such as a cathode ray tube (CRT), an LCD, or an organic EL, an audio output device such as a speaker or headphones, or a device that can visually or audibly notify a user of acquired information such as a printer, a mobile phone, or a facsimile. In addition, the output device 879 according to the present disclosure includes various kinds of devices that output tactile stimuli.

### (Storage 880)

The storage 880 is a device for storing various kinds of data. As the storage 880, for example, a magnetic storage device such as a hard disk drive (HDD), a semiconductor storage device, an optical storage device, a magneto-optical storage device, or the like is used.

### (Drive 881)

The drive 881 is a device for reading information recorded on the removable recording medium 901 and writing information on the removable recording medium 901. The removable recording medium 901 is, for example, a magnetic disk, an optical disk, a magneto-optical disk, a semiconductor memory, or the like.

### (Removable recording medium 901)

The removable recording medium 901 is, for example, a DVD medium, a Blu-ray (registered trademark) medium, an HD-DVD medium, various types of semiconductor storage media, or the like. Of course, the removable recording medium 901 may be, for example, an electronic device, an IC card on which a non-contact IC chip is mounted, or the like.

### (Connection port 882)

The connection port 882 is, for example, a port for connecting an external connection device 902 such as a Universal Serial Bus (USB) port, an IEEE934 port, a Small Computer System Interface (SCSI), an RS-232C port, or an optical audio terminal.

### (External connection device 902)

The external connection device 902 is, for example, a printer, a portable music player, a digital camera, a digital video camera, an IC recorder, or the like.

### (Communication device 883)

The communication device 883 is a communication device used for a connection to a network. The communication device 883 may be, for example, a communication card for a wired or wireless LAN, Bluetooth (registered trademark) or a wireless USB (WUSB), a rooter for optical communication, a rooter for an asymmetric digital subscriber line (ADSL), or a modem for various kinds of communication.

### <3. Conclusion>

As described above, the output control device 20 according to the present disclosure has a function of comparing master data generated on the basis of movements made by an experienced person or the like, with motion data collected on the basis of movements made by a target person. In addition, the output control device 20 according to the present disclosure has a function of causing a target output unit to output a tactile stimulus on the basis of a difference between the master data and the motion data. According to such configurations, it is possible to assisting a user to acquire complex techniques more intuitively.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, according to the above-described embodiment, the case where the output control device 20 causes only the tactile stimuli to be output on the basis of differences between the master data and the motion data has been described above as an example. However, the present technology is not limited thereto. For example, the output control device 20 according to the present disclosure may cause visual information or audio information to be output in addition to the tactile stimuli. For example, it is also possible for the output control device 20 to cause a display device, a speaker, or the like to output a message related to the difference at the same time as causing a target output unit to output a tactile stimulus. In addition, the output control device 20 may cause the target output unit to output sound, light, or the like.

In addition, according to the above-described embodiment, the case where the output control device 20 causes the tactile stimuli to be output on the basis of only the differences between the master data and the motion data has been described above as an example. However, it is also possible for the output control device 20 to cause the tactile stimuli to be output independently from the above-described differences. For example, the output control device 20 is capable of warning a target user by causing an output unit 120 to output a tactile stimulus independently from the above-described differences, the output unit 120 being placed at a position such as the tip of a finger to which the target user should pay attention, for example.

In addition, according to the above-described embodiments, the case where the devices 10 and the output control device 20 are used for sports or a dance has been described as an example. However, the present technology is not limited thereto. For example, the present technology may be applied to operation of a device that requires advanced techniques, such as driving of a vehicle. Alternatively, it is also possible to apply the present technology to a field in which cooperation with other users is heavily weighted, such as a chorus or a concert, for example.

Further, the respective steps in the processing of the output control device 20 in this specification are not necessarily executed in chronological order in accordance with the order illustrated in the flowcharts. In one example, the respective steps in the processing of the output control device 20 can be processed in the order different from the order illustrated in the flowcharts, or can also be processed in parallel.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 10: device
- 110: sensor unit
- 120: output unit
- 130: server communication unit
- 20: output control device
- 210: data processing unit
- 220: computation unit
- 230: storage unit
- 240: output control unit
- 250: device communication unit

## Claims

1. An output control device (20) comprising:
a computation unit (220) configured to:
calculate a difference between master data and motion data collected by a plurality of sensor units (110) included in a device (10); and
calculate a last difference between the master data and the motion data collected at a time of a last movement; and
an output control unit (240) configured to:
control output related to a plurality of output units (110) included in the device (10), on a basis of the difference;
cause a target output unit to output a tactile stimulus on a basis of the difference, the target output unit being placed at a position corresponding to the sensor unit (110) that has collected the motion data;
control the tactile stimulus to be output from the target output unit on a basis of a type or magnitude of the difference, wherein the difference includes a difference related to a movement start timing; control an output timing of the tactile stimulus to be output from the target output unit on a basis of the difference related to the movement start timing, wherein the tactile stimulus includes a guide stimulus for guiding a movement corresponding to the master data; and
control the guide stimulus to be output from the target output unit on a basis of the difference; and
control output of the guide stimulus on a basis of the last difference.

2. The output control device according to claim 1, wherein
the difference includes a difference related to magnitude of a movement, and
the output control unit (240) is further configured to control strength of the tactile stimulus to be output from the target output unit on a basis of the difference related to the magnitude of the movement.

3. The output control device (20) according to claim 1 or 2, wherein
the difference includes a difference related to duration of a movement, and
the output control unit (240) is further configured to control duration of the tactile stimulus to be output from the target output unit on a basis of the difference related to the duration of the movement.

4. The output control device (20) according to claim 1,
wherein the output control unit (240) causes the target output unit to output the guide stimulus before a timing of when a target user who are wearing the device (10) should make the movement corresponding to the master data.

5. The output control device (20) according to anyone of the previous claims, wherein
the tactile stimulus includes a feedback stimulus for providing the difference to a target user who are wearing the device (10), and
the output control unit (240) is further configured to control the feedback stimulus to be output from the target output unit on a basis of the difference.

6. The output control device (20) according to claim 5,
wherein the output control unit (240) is further configured to control the feedback stimulus on a basis of a type or magnitude of the difference, and/or
wherein the output control unit (20) is further configured to cause the target output unit to output the feedback stimulus within a predetermined period of time after the target user who are wearing the device makes a movement corresponding to the master data.

7. The output control device (20) according to anyone of the previous claims,
wherein the master data is data processed on a basis of a bodily characteristic of a target user who are wearing the device (10).

8. The output control device (20) according to anyone of the previous claims,
wherein the master data is generated on a basis of motion data collected from a movement made by another user.

9. The output control device (20) according to claim 8,
wherein the motion data collected from the movement made by the other user is collected simultaneously with motion data collected from a movement made by a target user who is wearing the device (10).

10. The output control device (20) according to anyone of the previous claims,
wherein the master data is generated on a basis of image information, and/or further comprising
a data processing unit (210) configured to generate master data on a basis of a bodily characteristic of a target user.

11. The output control device (20) according to anyone of the previous claims, comprising
a plurality of output units (120) configured to output tactile stimuli under the control of the output control unit (240), and/or further comprising
a plurality of sensor unit (110) configured to collect motion data based on a movement of a target user.

12. An output control method comprising:
calculating a difference between master data and motion data collected by a plurality of sensor units (110) included in a device (10);
calculating a last difference between the master data and the motion data collected at a time of a last movement;
controlling output related to a plurality of output units (120) included in the device (10), on a basis of the difference;
causing a target output unit to output a tactile stimulus on a basis of the difference, the target output unit being placed at a position corresponding to the sensor unit (110) that has collected the motion data;
controlling the tactile stimulus to be output from the target output unit on a basis of a type or magnitude of the difference, wherein the difference includes a difference related to a movement start timing;
controlling an output timing of the tactile stimulus to be output from the target output unit on a basis of the difference related to the movement start timing, wherein the tactile stimulus includes a guide stimulus for guiding a movement corresponding to the master data;
controlling the guide stimulus to be output from the target output unit on a basis of the difference; and
controlling output of the guide stimulus on a basis of the last difference.

13. A computer program comprising instructions which, when the program is executed by a computer, cause the computer to carry out the method of claim 12.

## Patentansprüche

1. Ausgabesteuerungsvorrichtung (20), die Folgendes umfasst:
eine Berechnungseinheit (220), die für Folgendes konfiguriert ist:
Berechnen einer Differenz zwischen Stammdaten und Bewegungsdaten, die von einer Vielzahl von Sensoreinheiten (110), die in einer Vorrichtung (10) enthalten sind, erfasst wurden; und
Berechnen einer letzten Differenz zwischen den Stammdaten und den Bewegungsdaten, die zum Zeitpunkt einer letzten Bewegung erfasst wurden; und
eine Ausgabesteuerungseinheit (240), die für Folgendes konfiguriert ist:
Steuern der Ausgabe in Bezug auf eine Vielzahl von Ausgabeeinheiten (110), die in der Vorrichtung (10) enthalten sind, auf der Grundlage der Differenz;
Veranlassen einer Zielausgabeeinheit, einen taktilen Reiz auf der Basis der Differenz auszugeben, wobei die Zielausgabeeinheit an einer Position angeordnet ist, die der Sensoreinheit (110) entspricht, die die Bewegungsdaten erfasst hat;
Steuern des von der Zielausgabeeinheit auszugebenden taktilen Reizes auf der Grundlage einer Art oder Größe der Differenz,
wobei die Differenz eine Differenz in Bezug auf den Bewegungsstartzeitpunkt beinhaltet;
Steuern eines Ausgabezeitpunkts des taktilen Reizes, der von der Zielausgabeeinheit ausgegeben werden soll, auf der Grundlage der Differenz in Bezug auf den Bewegungsstartzeitpunkt,
wobei der taktile Reiz einen Führungsreiz zur Führung einer den Stammdaten entsprechenden Bewegung enthält; und
Steuern des von der Zielausgabeeinheit auszugebenden Führungsreizes auf der Grundlage der Differenz; und
Steuern der Ausgabe des Führungsreizes auf der Grundlage der letzten Differenz.

2. Ausgabesteuerungsvorrichtung nach Anspruch 1, wobei
die Differenz eine Differenz in Bezug auf die Größe einer Bewegung beinhaltet, und
die Ausgabesteuerungseinheit (240) ferner so konfiguriert ist, dass sie die Stärke des von der Zielausgabeeinheit auszugebenden taktilen Reizes auf der Grundlage der mit der Größe der Bewegung verbundenen Differenz steuert.

3. Ausgabesteuerungsvorrichtung (20) nach Anspruch 1 oder 2, wobei
die Differenz eine Differenz in Bezug auf die Dauer einer Bewegung einschließt, und
die Ausgabesteuerungseinheit (240) ferner so konfiguriert ist, dass sie die Dauer des von der Zielausgabeeinheit auszugebenden taktilen Reizes auf der Grundlage der mit der Dauer der Bewegung verbundenen Differenz steuert.

4. Ausgabesteuerungsvorrichtung (20) nach Anspruch 1,
wobei die Ausgabesteuerungseinheit (240) die Zielausgabeeinheit veranlasst, den Führungsreiz vor einem Zeitpunkt auszugeben, zu dem ein Zielbenutzer, der die Vorrichtung (10) trägt, die den Stammdaten entsprechende Bewegung ausführen sollte.

5. Ausgabesteuerungsvorrichtung (20) nach einem der vorhergehenden Ansprüche, wobei
der taktile Reiz einen Rückkopplungsreiz enthält, um einem Zielbenutzer, der die Vorrichtung (10) trägt, die Differenz zu vermitteln, und
die Ausgabesteuerungseinheit (240) ferner so konfiguriert ist, dass sie den von der Zielausgabeeinheit auszugebenden Rückkopplungsreiz auf der Grundlage der Differenz steuert.

6. Ausgabesteuerungsvorrichtung (20) nach Anspruch 5,
wobei die Ausgabesteuerungseinheit (240) ferner so konfiguriert ist, dass sie den Rückkopplungsreiz auf der Grundlage einer Art oder Größe der Differenz steuert, und/oder
wobei die Ausgabesteuerungseinheit (20) ferner so konfiguriert ist, dass sie die Zielausgabeeinheit veranlasst, den Rückkopplungsreiz innerhalb einer vorbestimmten Zeitspanne auszugeben, nachdem der Zielbenutzer, der die Vorrichtung trägt, eine Bewegung entsprechend den Stammdaten ausführt.

7. Ausgabesteuerungsvorrichtung (20) nach einem der vorhergehenden Ansprüche,
wobei es sich bei den Stammdaten um Daten handelt, die auf der Grundlage einer körperlichen Eigenschaft eines Zielbenutzers, der die Vorrichtung (10) trägt, verarbeitet werden.

8. Ausgabesteuerungsvorrichtung (20) nach einem der vorhergehenden Ansprüche,
wobei die Stammdaten auf der Grundlage von Bewegungsdaten erzeugt werden, die von einer von einem anderen Benutzer ausgeführten Bewegung erfasst wurden.

9. Ausgabesteuerungsvorrichtung (20) nach Anspruch 8,
wobei die von der Bewegung des anderen Benutzers erfassten Bewegungsdaten gleichzeitig mit Bewegungsdaten erfasst werden, die von einer Bewegung eines Zielbenutzers erfasst werden, der die Vorrichtung (10) trägt.

10. Ausgabesteuerungsvorrichtung (20) nach einem der vorhergehenden Ansprüche,
wobei die Stammdaten auf der Grundlage von Bildinformationen erzeugt werden, und/oder ferner eine Datenverarbeitungseinheit (210) umfasst, die so konfiguriert ist, dass sie Stammdaten auf der Grundlage einer körperlichen Eigenschaft eines Zielbenutzers erzeugt.

11. Ausgabesteuerungsvorrichtung (20) nach einem der vorhergehenden Ansprüche, die Folgendes umfasst:
eine Vielzahl von Ausgabeeinheiten (120), die so konfiguriert sind, dass sie taktile Reize unter der Steuerung der Ausgabesteuerungseinheit (240) ausgeben, und/oder ferner Folgendes umfassen:
eine Vielzahl von Sensoreinheiten (110), die so konfiguriert sind, dass sie Bewegungsdaten auf der Grundlage einer Bewegung eines Zielbenutzers erfassen.

12. Ausgabesteuerungsverfahren, das Folgendes umfasst:
Berechnen einer Differenz zwischen Stammdaten und Bewegungsdaten, die von einer Vielzahl von Sensoreinheiten (110) in einer Vorrichtung (10) erfasst werden;
Berechnen der letzten Differenz zwischen den Stammdaten und den Bewegungsdaten, die zum Zeitpunkt der letzten Bewegung erfasst wurden;
Steuern der Ausgabe in Bezug auf eine Vielzahl von Ausgabeeinheiten (120), die in der Vorrichtung (10) enthalten sind, auf der Grundlage der Differenz;
Veranlassen einer Zielausgabeeinheit, einen taktilen Reiz auf der Grundlage der Differenz auszugeben, wobei die Zielausgabeeinheit an einer Position angeordnet ist, die der Sensoreinheit (110) entspricht, die die Bewegungsdaten erfasst hat;
Steuern des von der Zielausgabeeinheit auszugebenden taktilen Reizes auf der Grundlage einer Art oder Größe der Differenz,
wobei die Differenz eine Differenz in Bezug auf den Bewegungsstartzeitpunkt beinhaltet;
Steuern eines Ausgabezeitpunkts des taktilen Reizes, der von der Zielausgabeeinheit ausgegeben werden soll, auf der Grundlage der Differenz, die mit dem Bewegungsstartzeitpunkt zusammenhängt,
wobei der taktile Reiz einen Führungsreiz zur Führung einer den Stammdaten entsprechenden Bewegung enthält;
Steuern des von der Zielausgabeeinheit auszugebenden Führungsreizes auf der Grundlage der Differenz; und
Steuern der Ausgabe des Führungsreizes auf der Grundlage der letzten Differenz.

13. Computerprogramm, das Anweisungen enthält, die, wenn das Programm von einem Computer ausgeführt wird, den Computer veranlassen, das Verfahren nach Anspruch 12 auszuführen.

## Revendications

1. Dispositif de commande de sortie (20) comprenant :
une unité de calcul (220) configurée pour :
calculer une différence entre des données maîtresses et des données de mouvement collectées par une pluralité d'unités de capteurs (110) montées dans un dispositif (10) ; et
calculer une dernière différence entre les données maîtresses et les données de mouvement collectées à un temps d'un dernier mouvement ; et
une unité de commande de sortie (240) configurée pour :
commander une sortie d'une pluralité d'unités de sortie (110) incluses dans le dispositif (10), en fonction de la différence ;
actionner une unité de sortie cible pour délivrer un stimulus tactile en fonction de la différence, l'unité de sortie cible étant placée à une position correspondant à l'unité de capteur (110) qui a collecté les données de mouvement ;
commander le stimulus tactile que doit délivrer l'unité de sortie cible en fonction d'un type ou d'une grandeur de la différence, dans lequel la différence comporte une différence liée à un moment de début de mouvement ;
commander un moment de sortie du stimulus tactile que doit délivrer l'unité de sortie cible en fonction de la différence liée au moment de début de mouvement, dans lequel le stimulus tactile comporte un stimulus de guidage pour guider un mouvement correspondant aux données maîtresses ; et
commander le stimulus de guidage que doit délivrer l'unité de sortie cible en fonction de la différence ; et
commander la sortie du stimulus de guidage en fonction de la dernière différence.

2. Dispositif de commande de sortie selon la revendication 1, dans lequel
la différence comporte une différence de grandeur d'un mouvement, et
l'unité de commande de sortie (240) est configurée en outre pour commander la force du stimulus tactile que doit délivrer l'unité de sortie cible en fonction de la différence de grandeur du mouvement.

3. Dispositif de commande de sortie (20) selon la revendication 1 ou 2, dans lequel
la différence comporte une différence de durée d'un mouvement, et
l'unité de commande de sortie (240) est configurée en outre pour commander la durée du stimulus tactile que doit délivrer l'unité de sortie cible en fonction de la différence de durée du mouvement.

4. Dispositif de commande de sortie (20) selon la revendication 1,
dans lequel l'unité de commande de sortie (240) amène l'unité de sortie cible à délivrer le stimulus de guidage avant un moment auquel un utilisateur cible portant le dispositif (10) devrait effectuer le mouvement correspondant aux données maîtresses.

5. Dispositif de commande de sortie (20) selon l'une quelconque des revendications précédentes, dans lequel
le stimulus tactile comporte un stimulus de rétroaction pour fournir la différence à un utilisateur cible portant le dispositif (10), et
l'unité de commande de sortie (240) est configurée en outre pour commander le stimulus de rétroaction que doit délivrer l'unité de sortie cible en fonction de la différence.

6. Dispositif de commande de sortie (20) selon la revendication 5,
dans lequel l'unité de commande de sortie (240) est configurée en outre pour commander le stimulus de rétroaction en fonction d'un type ou d'une grandeur de la différence, et/ou
dans lequel l'unité de commande de sortie (20) est configurée en outre pour amener l'unité de sortie cible à délivrer le stimulus de rétroaction dans un laps de temps prédéterminé après que l'utilisateur cible portant le dispositif a effectué un mouvement correspondant aux données maîtresses.

7. Dispositif de commande de sortie (20) selon l'une quelconque des revendications précédentes,
dans lequel les données maîtresses sont des données traitées relativement à une caractéristique corporelle d'un utilisateur cible portant le dispositif (10).

8. Dispositif de commande de sortie (20) selon l'une quelconque des revendications précédentes,
dans lequel les données maîtresses sont générées en fonction de données de mouvement collectées à partir d'un mouvement effectué par un autre utilisateur.

9. Dispositif de commande de sortie (20) selon la revendication 8,
dans lequel les données de mouvement collectées à partir du mouvement réalisé par l'autre utilisateur sont collectées simultanément avec des données de mouvement collectées à partir d'un mouvement réalisé par un utilisateur cible portant le dispositif (10).

10. Dispositif de commande de sortie (20) selon l'une quelconque des revendications précédentes,
dans lequel les données maîtresses sont générées en fonction d'informations d'image, et/ou comprenant en outre
une unité de traitement de données (210) configurée pour générer des données maîtresses relatives à une caractéristique corporelle d'un utilisateur cible.

11. Dispositif de commande de sortie (20) selon l'une quelconque des revendications précédentes, comprenant
une pluralité d'unités de sortie (120) configurées pour délivrer des stimuli tactiles sous la commande de l'unité de commande de sortie (240) et/ou comprenant en outre
une pluralité d'unités de capteurs (110) configurée pour collecter des données de mouvement en fonction d'un mouvement d'un utilisateur cible.

12. Procédé de commande de sortie comprenant :
le calcul d'une différence entre des données maîtresses et des données de mouvement collectées par une pluralité d'unités de capteurs (110) montées dans un dispositif (10) ;
le calcul d'une dernière différence entre les données maîtresses et les données de mouvement collectées lors d'un dernier mouvement ;
la commande d'une sortie d'une pluralité d'unités de sortie (120) incluses dans le dispositif (10), en fonction de la différence ;
l'actionnement d'une unité de sortie cible pour délivrer un stimulus tactile en fonction de la différence, l'unité de sortie cible étant placée à une position correspondant à l'unité de capteur (110) qui a collecté les données de mouvement ;
la commande du stimulus tactile que doit délivrer l'unité de sortie cible en fonction d'un type ou d'une grandeur de la différence, dans lequel la différence comprend une différence liée à un moment de début de mouvement ;
la commande d'un moment de sortie du stimulus tactile que doit délivrer l'unité de sortie cible en fonction de la différence liée au moment de début de mouvement, dans lequel le stimulus tactile comporte un stimulus de guidage pour guider un mouvement correspondant aux données maîtresses ;
la commande du stimulus indicatif que doit délivrer l'unité de production cible en fonction de la différence ; et
la commande de la sortie du stimulus de guidage en fonction de la dernière différence.

13. Programme d'ordinateur comprenant des instructions qui, lorsque le programme est exécuté par un ordinateur, amènent l'ordinateur à réaliser le procédé selon la revendication 12.
